# EUROPEAN PATENT SPECIFICATION

(11) **EP 4 551 649 B1**
(45) Date of publication and mention of the grant of the patent: **04.11.2026**
(21) Application number: 22785684.6
(22) Date of filing: 29.07.2022
(51) Int. Cl.: C08K 5/17, C08G 18/73, C08G 18/62, C08G 18/70, C09D 175/04, C09D 133/06, C09D 7/63, C09D 5/00

(54) **GLYCOL ETHER AMINES FOR AQUEOUS TWO-COMPONENT POLYURETHANE COATING**
GLYKOLETHERAMINE FÜR WÄSSRIGE ZWEIKOMPONENTEN-POLYURETHAN-BESCHICHTUNGEN
AMINES D'ÉTHER DE GLYCOL POUR REVÊTEMENT AQUEUX DE POLYURÉTHANE À DEUX COMPOSANTS

(43) Date of publication of application: 14.05.2025
(73) Proprietor: Dow Global Technologies LLC, Midland, MI 48674 (US)
(72) Inventor: JI, Jing, Shanghai 201203 (CN); CHEN, Xue, Lake Jackson, Texas 77566 (US)
(74) Representative: Beck Greener LLP
(86) International application number: PCT/CN2022/108875
(87) International publication number: WO 2024/020995

(56) References cited:
- US-A- 5 300 363
- US-A- 5 508 340
- US-A1- 2016 257 824
- US-A1- 2021 309 791

## Description

The present invention generally relates to aqueous compositions comprising (i) an aqueous acrylic or vinyl polymer dispersion wherein the polymer comprises an average of two or more hydroxyl groups or contains a polyol, (ii) one or more pigments, extenders or colorants, or their combination, and (iii) one or more glycol ether amines. More particularly, it relates to aqueous coating compositions useful as pigment dispersions and isocyanate curable aqueous coating compositions comprising a polyol or hydroxyl group-containing aqueous acrylic or vinyl polymer dispersion, one or more pigments, extenders and/or colorants and one or more glycol ether amines. The aqueous compositions provide enhanced pH and pigment dispersion stability and readily form a polyurethane coating having acceptable appearance and film properties when combined with a water dispersible polyisocyanate curing agent.

Polyurethanes comprise repeat units that contain carbamate groups of formula (A):

-O-C(=O)-N<(A).

Polyurethanes have found many uses in chemical and allied industries. Examples of such uses are in preparing coatings, sealants, and adhesives. A polyurethane typically is prepared by curing a mixture of two reactants, such as separate components, which react together to produce the polyurethane. Known aqueous two-component polyurethane coating compositions comprising water-dispersible isocyanates and emulsion polymers can significantly reduce the volatile organic content (VOC) level of coatings made therefrom and have a reasonable cure speed, but yet fail to provide composition stability and dry-film properties on the level of a solvent borne polyurethane composition. Thus, there remains a need for a pH neutralizer that enables better pigment dispersion and pH stability in aqueous compositions without negatively affecting the dry-film properties of coatings made from them.

Although typically used only at 0.1 wt.% to 1 wt.% of the total formulation, pH neutralizers influence the overall performance of aqueous coating compositions. Depending on the formulation, formulators have several options for adjusting pH in their formulations. The most commonly used neutralizer is ammonia which has a strong odor, making it unsuitable for using in low-odor coatings. Organic amines, such as 2-amino-2-methyl-1-propanol, are accepted by the coatings industry for their multifunctional benefits beyond pH neutralization, such as pH stability, improved pigment dispersion and low odor. However, especially for industrial coatings applications, there remains a need for an organic amine neutralizer that provides the benefits of a low odor organic amine neutralizer and improved pigments or colorants dispersion, without negatively affecting the application or the final coating.

U.S. Pat. No. 5,626,915 to Laura et al. discloses aqueous coating compositions that comprise: (i) a polyol; (ii) a surfactant, such as a non-ionic surfactant; (iii) a halogenated polyolefinic resin material or other similar halogenated resin, such as a PVC resin; (iv) an aliphatic amine, such as an amino-substituted alkanol such as amino propanol; and (v) water. The amines may be selected from the group consisting of alkylamines, alkyldiamines, alkanolamines, dialkanolamines, tertiary amines, poly(oxyalkylene)diamines, and mixtures thereof. Laura et al. disclose coatings have enhanced adhesion to substrates. However, Laura et al. fail to disclose compositions that have improved pH or dispersion stability. A further relevant prior art is US 5 508 340 A which discloses an aqueous two-component polyurethane coating composition.

The present inventors have sought to solve the problem of providing an aqueous composition which exhibits improved pigment dispersion and pH stability and that enables formation of polyurethane coatings without negatively affecting the dry-film properties of the polyurethane coating formed using them.

### STATEMENT OF THE INVENTION

In accordance with the present invention, aqueous compositions comprise:
(i) an aqueous acrylic or vinyl polymer dispersion wherein the polymer comprises an average of two or more hydroxyl groups, such as a part of the polymer itself, or contains a polyol, such as one absorbed in the polymer or adsorbed onto the polymer,
(ii) one or more pigments, extenders or colorants, or their combination, and,
(iii) one or more glycol ether amines having the following formula I: 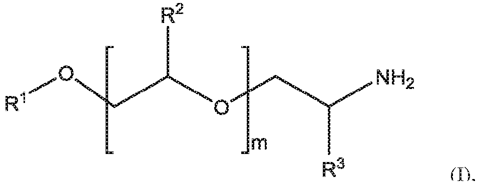 wherein R¹ is a C₁ to C₆ alkyl group, preferably, a C₃ to C₄ alkyl group; R² and R³ are, independently, CH₃ or CH₂-CH₃; and, m is 1 to 6, or, preferably, from 1 to 2. Further, the compositions may comprise (iv) one or more coalescing solvents, such as an alkyl glycol ether, for example, propylene glycol methyl ether. Suitable amounts of the (iii) one or more glycol ether amines may range from 0.1 to 2 wt.%, or, preferably, from 0.1 to 1.5 wt.%, based on the total weight of the aqueous composition. The aqueous compositions may comprise from 15 to 50 wt.%, or, preferably, from 20 to 45 wt.%, as solids, of the (i) acrylic or vinyl polymer that contains an average of two or more hydroxyl groups, based on the total weight of the aqueous composition. The aqueous compositions may have a total solids content of from 20 to 70 wt.%,
or, preferably, from 25 to 65 wt.%, based on the total weight of the aqueous composition. The aqueous compositions may further comprise a water dispersible polyisocyanate curing agent comprising one or more polyisocyanates, thereby forming a curable, aqueous coating composition, for example, a composition in which the curing agent has not yet reacted into the aqueous acrylic or vinyl polymer. In the aqueous coating compositions of the present invention, the ratio of isocyanate equivalents in the water dispersible polyisocyanate curing agent to the total number of hydroxyl group equivalents in the aqueous acrylic or vinyl polymer dispersion may range from, for example, 0.7:1.0 to 2.0:1.0, or, preferably, from 0.75:1 to 1.4:1. Preferably, one or more of the aqueous composition and the aqueous coating composition, or, more preferably, both are substantially free of volatile organic compounds, or have a total of 50g/l or less of such compounds.

In another aspect in accordance with the present invention, methods of forming a coating comprise mixing the aqueous compositions of the present invention with a water dispersible polyisocyanate curing agent component to form an aqueous coating composition, applying the aqueous coating compositions to a substrate or a carrier, such as a film, and curing to form a coating or film on the substrate or carrier.

### DETAILED DESCRIPTION OF THE PRESENT INVENTION

The aqueous compositions of the present invention comprise storage stable pigmented, colored or extender containing aqueous acrylic or vinyl polymer dispersions comprising one or more glycol ether amines that exhibit excellent pH stability and a low viscosity. The aqueous acrylic or vinyl polymer dispersion comprises a polymer, such as, for example, a copolymer of hydroxyalkyl (meth)acrylate and an alkyl (meth)acrylate, that has an average of two or more hydroxyl groups per polymer chain or as side-chain groups, or that comprises at least one polyol in the polymer composition with the polymer acting as a carrier, absorbent or adsorbent; and, the glycol ether amines in accordance with the present invention comprise alkylamine (oligo)glycol ethers having 1 to 6 ether groups and one hydroxyl group. When the aqueous compositions further comprise a water dispersible polyisocyanate curing agent, they readily provide urethane coatings from aqueous media. Thus, the compositions enable easy formulation of aqueous pigmented or opacifying coatings made in the manner of emulsion polymer formulations which can be made into urethane forming aqueous coating compositions that provide good dry film properties of appearance, gloss and early water resistance suitable for industrial or architectural coatings or aqueous wood stains or sealants.

Unless otherwise indicated, conditions of temperature and pressure are room temperature (23 °C) and standard pressure (101.3 kPa, also referred to as "ambient conditions". And, unless otherwise indicated, all conditions include a relative humidity (RH) of 50 %.

Unless otherwise indicated, any term containing parentheses refers, alternatively, to the whole term as if parentheses were present and the term without them, and combinations of each alternative. Thus, as used herein the term, "(meth)acrylate" and like terms is intended to include acrylates, methacrylates and their mixtures.

The singular forms "a," "an," and "the" include plural referents unless the context clearly dictates otherwise. Unless defined otherwise, the terms used herein have the same meaning as is commonly understood by one skilled in the art.

All ranges recited are inclusive and combinable. For example, a disclosed amount of the (iii) one or more glycol ether amines ranging from 0.1 to 2 wt.%, or, preferably, from 0.1 to 1.5 wt.%, based on the total weight of an aqueous composition would include amounts of from 0.1 to 2 wt.%, or, of from 1.5 to 2 wt.%, or, preferably, of from 0.1 to 1.5 wt.%.

As used herein, the term "addition polymer" means an acrylic or vinyl polymer made by radical addition, e.g. initiation, polymerization.

As used herein the term "aqueous" means that the continuous phase or medium is water and from 0 to 50 wt.%, based on the weight of the medium, of water-miscible compound(s). Preferably, "aqueous" means water.

As used herein, the term "aqueous" means water or a mixture of water and a minor portion (no more than 50 wt. %, based on the total weight of the water and any solvent) of one or more water miscible solvent, or, preferably, a mixture of water and 10 wt.% or less, based on the total weight of water and any solvent.

As used herein, the term "ASTM" refers to publications of ASTM International, Conshohocken, Pa.

As used herein, the term "component" refers to a composition containing one or more ingredients which is combined with another component to start a reaction, polymerization or cure. Components are kept separate until combined at the time of use or reaction.

As used herein, the term "curing" means subjecting to conditions effective for chemically transforming or chemically transforming under such conditions.

As used herein, unless otherwise indicated, the term "calculated Tg" or "calculated glass transition temperature" refers to the Tg of a polymer calculated by using the Fox equation (T. G. Fox, Bull. Am. Physics Soc., Volume 1, Issue No. 3, page 123 (1956). For reference and use in calculating a Tg, a comprehensive compilation of available data describing glass transition temperatures of homopolymers from suitable monomers can be found in Polymer Handbook, Vol. 1, editors Brandrup, J.; Immergut, E. H.; Grulke, E. A., 1999, pages VI/193-277.

As used herein, the term "dispersion polymer" means a polymer dispersed in a continuous medium. Aqueous dispersion polymers are dispersed in water and include emulsion polymers, which are made aqueous dispersions, and polymers dispersed in water after they were made.

As used herein, the term, "hydroxyl functionality" refers to the average number of hydroxyl s per molecule and, for an addition polymer or oligomer chain is the number average molecular weight (Mₙ) of the polymer multiplied by the weight fraction (WF)(1 is 100 wt.%, 0.1 is 10 wt.%) of total hydroxyl functional monomer used to make the polymer, divided by the hydroxyl equivalent weight (HEW) of the monomer or by a weighted average hydroxyl equivalent weight for a mixture of two or more monomers. For example, for hydroxyalkyl(meth)acrylate (HEMA), the hydroxyl functionality is one and the hydroxyl equivalent weight is the same as its molecular weight; for cyclohexane dimethanol, the hydroxyl functionality is two and the hydroxyl equivalent weight is half of its molecular weight. For a HEMA containing polymer which has an Mₙ of 10,000 and comprises 10 wt.% of HEMA, based on the total weight of monomers used to make the polymer, the hydroxyl functionality is (Mₙ X WF/HEW or (10,000 X 0.1)/130.1 or 7.69 hydroxyls per polymer molecule.

As used herein, the term "hydroxyl equivalents" in the case of acrylic or vinyl emulsion polymers that contain two or more hydroxyl groups, is calculated based on the theoretical calculation: Taking the molecular weight of hydroxyl functional monomer, such as HEMA, or a (non-volatile) polyol, such as cyclohexane dimethanol, multiplying by the hydroxyl functionality of the monomer or polyol in question, and multiplying by the weight fraction (1 is 100 wt.%, 0.1 is 10 wt.%) of such hydroxyl functional monomer or polyol in the aqueous acrylic or vinyl polymer dispersion. For commercially available polyols, unless otherwise indicated, the HEW given is that reported by the producer without further determination.

As used herein, the term, "isocyanate functionality" refers to the average number of isocyanate groups per molecule and, for an addition polymer or oligomer chain is the number average molecular weight (Mₙ) of the polymer multiplied by the weight fraction (WF)(1 is 100 wt.%, 0.1 is 10 wt.%) of total isocyanate functional monomer used to make a vinyl or acrylic polymer, divided by the isocyanate equivalent weight (IEW) of the monomer or by a weighted average isocyanate equivalent weight for a mixture of two or more monomers. For example, for isocyanatoethyl methacrylate (IEM), the hydroxyl functionality is one and the isocyanate equivalent weight is the same as its molecular weight; for hexamethylene diisocyanate, the hydroxyl functionality is two and the hydroxyl equivalent weight is half of its molecular weight. For an IEM containing polymer which has an Mₙ of 10,000 and comprises 10 wt.% of IEM, based on the total weight of monomers used to make the polymer, the isocyanate functionality is (Mₙ X WF/HEW or (10,000 X 0.1)/155.2 or 6.44 isocyanates per polymer molecule.

As used herein, the term "isocyanate equivalents" is the isocyanate equivalent weight (IEW) of a given molecule as reported by the producer without further determination multiplied by the number of grams of the molecule used, or is the number of isocyanate equivalents in a given molecule multiplied by the number of moles of the molecule used.

As used herein, the term "ISO" refers to the publications of the International Organization for Standardization, Geneva, CH.

As used herein, unless otherwise indicated, the term "measured glass transition temperature" or "measured Tg" refers to the glass transition temperature of a material as determined by Differential Scanning calorimetry (DSC) scanning between -90° C. to 150° C. while heating at a rate of 10° C./min. The Tg is the inflection point of the curve of heat flow vs. temperature or the maximum value on the plot of its derivative.

As used herein, the term "(meth)acrylate" means acrylate, methacrylate, and mixtures thereof and the term "(meth)acrylic" used herein means acrylic, methacrylic, and mixtures thereof.

As used herein, unless otherwise indicated, the term "polyol" includes diols, triols and hydroxyl functional molecules having four or more hydroxyl groups.

As used herein, unless otherwise indicated, the term "polyol solids" refers to diols or polyols or acrylic or vinyl dispersion polymers and excludes water and any solvent.

As used herein, the term "polyester polyol" means a subclass of polyol that is an organic molecule having at least 2 alcohol (-OH) groups (preferably including alpha and omega -OH) and at least one carboxylic ester (CO₂-C) functionality. The term "alkyd" means a subclass of polyester polyol that is a fatty acid-modified polyester polyol wherein at least one carboxylic ester functionality is derived from an esterification reaction between an alcohol -OH of the polyol and a carboxyl of a (C₈-C₆₀) fatty acid.

As used herein, unless otherwise indicated, the term "polyisocyanate" refers to any isocyanate functional molecule having two or more isocyanate groups.

As used herein, the term "polymer" refers, in the alternative, to a polymer made from one or more different monomer, such as a copolymer, a terpolymer, a tetrapolymer, a pentapolymer etc., and may be any of a random, block, graft, sequential or gradient polymer.

As used herein, the term "based on the total weight of monomers used to make a copolymer," refers to the total of monomers as solids and excludes chain transfer agents.

As used herein, the term "substantially free of volatile organic compounds" means that a composition contains less than 50 g/l, based on the total weight of the composition, or, preferably, less than 25 g/l of the total amount of organic solvents, including glycol ether amines, coalescing solvents and all other organic solvents in a given composition.

As used herein, the term "total solids" refers to everything in a given composition other than water and volatile solvents which flash off or volatilize at 40 °C or below and atmospheric pressure. Thus, coalescing solvents and glycol ether amines are not considered as solids. Diols and polyols, which react in to a given composition, are considered as solids.

As used herein, the phrase "wt. %" stands for weight percent.

The aqueous compositions in accordance with the present invention comprises (i) an aqueous acrylic or vinyl polymer dispersion wherein the polymer itself contains an average of two or more hydroxyl groups or wherein each molecule of the polymer in the dispersion comprises an average of at least one polyol molecule, such as a diol, polyol or oligomer thereof that is complexed or reacted with (adsorbed onto) or absorbed in (imbibed into) the polymer which can act as a carrier. The aqueous acrylic or vinyl dispersion polymer can be a multistage polymer which absorbs a polyol. The aqueous compositions further comprise (ii) one or more pigments, extenders or colorants or their combination. In addition, the aqueous compositions further comprise (iii) one or more organic glycol ether amines of the below formula I: 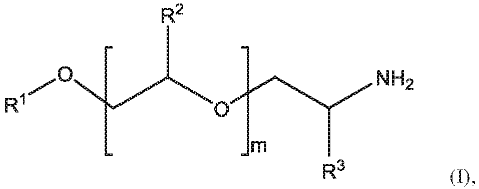 wherein R¹ is a C₁ to C₆ alkyl group, preferably, a C₃ to C₄ alkyl group; R² and R³ are, independently, CH₃ or CH₂-CH₃; and, m is 1 to 6, or, preferably, from 1 to 2. Further, the compositions may comprise (iv) one or more coalescing solvents, such as an alkyl glycol ether, for example, propylene glycol methyl ether.

The (i) aqueous acrylic or vinyl polymer dispersion comprises an average of two or more hydroxyl groups which may be part of the polymer itself, such as in the polymer backbone or as a side chain, or as a polyol that is post-reacted with the polymer (absorbed into) or otherwise contained or absorbed in the dispersion, for example, imbibed or absorbed in a polymer in the aqueous acrylic or vinyl polymer dispersion.

Suitable aqueous acrylic or vinyl polymer dispersions may include acrylic, styrene-acrylic, styrene-butadiene, olefin, vinyl chloride, ethylene vinyl acetate, and polyvinyl acetate emulsion polymers, preferably, acrylic and styrene-acrylic. The aqueous dispersion polymer composition may have multiple stages, each with a separate measured glass transition temperatures or Tg (measured Tg) with at least one measured Tg of from -10 to 100 °C., preferably, from 20 °C. to 80 °C. If the measured Tg of the emulsion polymer is too high, then suitable aqueous compositions comprising them may require excessive solvent for workability. If the measured Tg of the polymer is too low, then coatings made from them can suffer from low hardness.

The (i) aqueous acrylic or vinyl polymer dispersion may be formed by conventional means, such as, for example, free radical emulsion or aqueous addition polymerization in the presence of a free radical initiator, e.g. a peracid or its salt In forming aqueous acrylic or vinyl polymer dispersions by addition polymerization. Monomers may be added to the polymerization as a single charge for higher molecular weight products, or, for lower molecular weights or multiple phase polymers, by gradual addition polymerization. It may also be advantageous to stage monomer additions non-uniformly into the polymer to form multiphase polymer particles to create a core-shell, hemispherical, or occluded morphology.

Monomers suitable for the preparation of the (i) aqueous dispersion or emulsion polymers include alkyl(meth)acrylates such as methyl(meth)acrylate, ethyl(meth)acrylate, butyl(meth)acrylate, 2-ethylhexyl(meth)acrylate, vinyl esters, vinyl ethers, allyl ethers, vinyl arenes, such as styrene, and combinations thereof. As used herein, the term "(meth)acrylic acid" refers to methacrylic acid or acrylic acid. Additional monomers may be used to prepare the aqueous acrylic or vinyl polymer dispersion polymer including carboxylic acid monomers such as (meth)acrylic acid and itaconic acid, and salts thereof; sulfonic acid monomers such as sodium styrene sulfonate and acrylamido-methyl-propane sulfonate and salts thereof; and phosphoric acid monomers such as phosphoethylmethacrylate and salts thereof. Monomers such as styrene, acrylonitrile, and acetoacetoxyethyl methacrylate (AAEM), as well as monomers capable of imparting co-curable functionality such as glycidyl(meth)acrylates and hydroxyalkyl(meth)acrylates, may also be used in the preparation of the aqueous acrylic or vinyl polymer dispersion. Where AAEM is used, it may be desirable to post-react a polymer of a (meth)acrylate monomer with a primary amine or ammonia to form a polymer containing the corresponding enamine, acetoacetoxyethyl methacrylate enamine.

To enable harder or rubbery phases in, or to enhance the polyol absorption capacity of the (i) aqueous acrylic or vinyl polymer dispersion, it may be advantageous to incorporate into the polymer small amounts of copolymerized multi-ethylenically unsaturated monomer groups, including allyl(meth)acrylate, diallyl phthalate, 1,4-butylene glycol di(meth)acrylate, 1,2-ethylene glycol di(meth)acrylate, 1,6-hexanediol di(meth)acrylate, and divinyl benzene.

Chain transfer agents may be used to control the molecular weight of the (i) aqueous acrylic or vinyl dispersion polymers during polymerization. Examples of chain transfer agents include dodecylmercaptan, butyl mercaptopropionate, methylmercaptopropionate, hydroxy group containing mercaptans, such as hydroxyethyl mercaptan, and mercaptopropionic acid.

Examples of suitable (i) aqueous acrylic or vinyl dispersion polymers may include acrylic and styrene-acrylic, polymers as well as acrylic and vinyl copolymers from vinyl acetate, preferably, acrylic and styrene-acrylic polymers that have on average two or more hydroxyl groups.

Suitable (i) aqueous acrylic or vinyl polymer dispersions having an average of two or more hydroxyl groups may include those formed by conventional means. In such polymers, hydroxyl group functionality may be provided by hydroxyl functional vinyl or acrylic monomers, such as hydroxyethyl methacrylate (HEMA), caprolactone(meth)acrylate or allyl alcohol, or via condensation of a diol or polyol with a carboxyl-group containing monomer, in copolymerized form, post polymerization to form hydroxy group containing side chains, or via absorption or adsorption of a polyol into the polymer, such as into a multistaged polymer having a crosslinked stage after polymerization.

In one example of an (i) aqueous acrylic or vinyl polymer dispersion of polymers comprising an average of two or more hydroxyl groups in accordance with the present invention, an aqueous dispersion of an acrylic polymer may contain, in polymerized form, a hydroxyl containing monomer, such as hydroxyethyl methacrylate (HEMA) or hydroxypropyl methacrylate. In another example, the acrylic or vinyl polymer may comprise, in copolymerized form, a carboxyl containing monomer, such as (meth)acrylic acid, onto which is adsorbed a polyol (i.e. a diol) to form a polyol containing polymer that, for example, may be capable of forming a polymer by way of step-growth polymerization with a water dispersible polyisocyanate. Such an acrylic polymer can be prepared through emulsion polymerization, by suspension addition polymerization followed dispersion with a surfactant or emulsifier, or by dispersion of a pre-formed polymer under shear into an aqueous medium, such as in the presence of a surfactant or emulsifier, followed by adsorption of the polyol into the polymer in the presence of shear.

To formulate a composition of a polyol absorbed in or adsorbed (chemically reacted) onto an (i) aqueous acrylic or vinyl polymer dispersion composition, the polymer can itself be combined with a diol or polyol composition in neat form (for water-soluble diols or polyols) or in the form of an aqueous dispersions (for less water-soluble diols or polyols). In aqueous dispersions of polyols, the diol or polyols are preferably micronized and stabilized with a stabilizing amount of a surfactant, preferably at a concentration in the range of about 0.5 to 5 wt. %, based on total solids in this aqueous dispersion, and then mixed with the aqueous acrylic or vinyl polymer dispersion. Nonionic surfactants are preferred, including alkylphenol ethxoylate (APEO) free, non-ionic wetting agents such as polyalkylene oxide block copolymers, polyoxyethylene glycol alkyl ethers, glucoside alkyl ethers, fatty acid esters, glycerol alkyl esters, sorbitan alkyl esters, and polyoxyethylene glycol alkylphenol ethers, including commercially available wetting agents such as TRITON^{™} HW-1000 alkyl ethoxylate (Dow Chemical, Midland, Mich.).

Suitable polyols that can be added to, absorbed in or adsorbed onto an (i) aqueous acrylic or vinyl polymer dispersion may include, for example, any that will provide an acceptable polyurethane. These may include dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 3-methyl-1,2-butanediol, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydrogenated bisphenol A, hydrogenated bisphenol F, spiroglycol, and dihydroxymethyltricyclodecane; hydroxycarboxylic acids, such as 2,2-dimethylolpropionic acid, 2,2-dimethylolbutanoic acid, 2,2-dimethylolpentanoic acid, 2,2-dimethylolhexanoic acid, and 2,2-dimethyloloctanoic acid; polylactone diols obtained by adding lactone compounds, such as ε-caprolactone, to such dihydric alcohols; ester diol compounds such as bis(hydroxyethyl) terephthalate; polyether diol compounds such as alkylene oxide adducts of bisphenol A, polyethylene glycols, polypropylene glycols, and polybutylene glycols; polyester diol compounds, such as bis(hydroxyethyl)terephthalates, and bis(hydroxyalkyl) poly(alkylene terephathalates) or the reaction product of excess polyol with a dicarboxylic acid; trihydric or higher polyhydric alcohols such as glycerol, trimethylolethane, trimethylolpropane, diglycerol, triglycerol, 1,2,6-hexanetriol, pentaerythritol, dipentaerythritol, tris(2-hydroxyethyl) isocyanuric acid, sorbitol, and mannitol; and polylactone polyols obtained by adding lactone compounds, such as ε-caprolactone, to such trihydric or higher polyhydric alcohols.

Preferably, polyols comprised in an (i) aqueous acrylic or vinyl polymer dispersion comprise any cycloaliphatic diol or polyol having a molecular weight of from 100 to 500 and containing one or more 4 to 7 member aliphatic ring or any oligomeric diol or polyol made from a cycloaliphatic diol or polyol having a molecular weight of from 100 to 500 and comprising at least 30 wt. % weight percent of cycloaliphatic diol and/or polyol and having a weight average molecular weight of from 200 to 3000, preferably from 200 to-2000, more preferably from 200 to 1000 to achieve coatiⁿg compositions that are substantially free of VOCs with acceptable film forming properties. Such polyols include, for example, cyclohexanedimethanol (CHDM), especially 1,3 CHDM, 1,4 CHDM, mixtures thereof, dianhydro-d-glucitol, which has two 5 membered rings, each containing an oxygen atom, 4,8-Bis(hydroxymethyl)tricyclo [5.2.1.0^{2,6}] decane, 2,2,4,4-tetramethyl cyclobutanediol, containing a 4 membered ring and oligomers thereof comprising the condensation reaction product of at least 30 wt. % preferably, at least 40 wt. %, based on the total weight of reactants used to make the oligomer, of, the cycloaliphatic diol and/or polyol containing one or more 4 to 7 member aliphatic ring. See, for example, US20140170327A1 to Dombrowski et al. These may include, for example, oligo- or polyesters, short chain alkyds, oligo- or polycarbonates, oligo- or polyethers and oligo- or polylactones having a desired low molecular weight. Such oligomers may be made by conventional means, such as by bulk polymerization. For example, polyesters may be made, e.g. from diacids or difunctional anhydrides or their salts cycloaliphatic diols or triols having one or more 4 to 7 member aliphatic rings.

Preferably, to improve coating film properties such as hiding, the (i) aqueous acrylic or vinyl polymer dispersion of the present invention can comprise multistage polymers, preferably acorn polymers, such as, for example, those described in U.S. Pat. No. 7,179,531(B2) that contain a first polymer stage formed from monomers that provide pendant pigment adsorbing functional groups, such as phosphorous acid groups, phosphorous acid ester groups, polyacid side chains and mixtures thereof, and contain in a second polymer stage the copolymerization product of hydroxyl group containing monomers such as hydroxyethyl(meth)acrylate or allyl alcohol. In a multistaged hydroxyl functional (i) aqueous acrylic or vinyl polymer dispersion, a copolymerizable hydroxyl group functional monomer included by staged free radical polymerization in one or more phases of the emulsion polymer particle to offer advantages, such as faster film drying speed. For example, this may comprise placing all of the HEMA within one stage or a core or a shell of a core-shell emulsion polymer as opposed to a uniform distribution of HEMA in both or all phases or stages.

Suitable amounts of the (i) aqueous acrylic or vinyl polymer in the aqueous dispersion composition of the present invention may range from 15 to 50 wt.%, or, preferably, from 20 to 45 wt.%, as solids, based on the total weight of the aqueous composition.

The aqueous composition of the present invention further comprises (ii) one or more pigments, extenders or colorants or their mixtures. Examples of suitable pigments may include, for example, titanium oxide, zinc white, iron oxide, carbon black, blue, such as azurite or Egyptian blue, oxidized ferrous ferrocyanides, such as Prussian blue pigment, and cobalt blue (oxide) pigments, effect pigments, such as aluminum powder, mica powder, and titanium oxide-coated mica powder. Suitable extenders may include, for example, talc, clay, kaolin, baryta, barium sulfate, barium carbonate, calcium carbonate, silica, and alumina white. Colorants may include organic and metallo-organic compounds that can also be referred to as pigments, for example, phthalocyanine azo pigments, phthalocyanine pigments, quinacridone pigments, isoindoline pigments, indanthrene pigments, and perylene pigments. Colorants need only be used sparingly and so are combined with extenders or inorganic pigments.

Suitable total amounts of the (i) one or more pigments, extenders or colorants, or their combination in the aqueous compositions of the present invention may range from 5 to 85 wt.%, or, from 5 to 75 wt.%, or, 10 wt.% or more, or, up to 65 wt.%, or, preferably, from 20 to 55 wt.%, based on the total weight of the aqueous composition. Suitable pigment volume concentrations (%PVC) in the aqueous composition of the present invention may include from 2 to 50 %PVC, and more preferably, from 4 to 30 %PVC, based on the total volume of pigments, extenders or colorants, polymer and other total solids contained in the aqueous composition. %PVC is determined via microscopy of the cross-section of a dry film made from the aqueous composition. Suitable amounts of colorants may range from 0.01 to 0.5 wt.%, or, from 0.1 to 0.4 wt.%, based on the total weight of the aqueous composition.

The (iii) one or more glycol ether amines in accordance with the present invention may be simply mixed into the aqueous compositions as part of an (i) aqueous acrylic or vinyl polymer dispersion. The glycol ether amines may be used in sufficient amounts as needed to stabilize the pH or the pigments, extenders and/or colorants contained in the aqueous compositions. For example, suitable amounts of the (iii) one or more glycol ether amines may range from 0.1 to 2 wt.%, or, preferably, from 0.1 to 1.5 wt.%, based on the total weight of the aqueous composition. The aqueous compositions in accordance with the present invention may further comprise (iv) one or more coalescing solvents. Suitable coalescing solvents, which aid in film formation during drying, include (di)alkylene glycol monoalkyl ethers, such as ethylene glycol monomethyl ether, ethylene glycol monobutyl ether, ethylene glycol monoethyl ether acetate, ethylene glycol monobutyl ether acetate, diethylene glycol monobutyl ether, diethylene glycol monoethyl ether acetate, dipropylene glycol monomethyl ether, propylene glycol n-butyl ether (PnB, including those sold under the tradename DOWANOL^{™}), dipropylene glycol n-butyl ether (DPnB, including those sold under the tradename DOWANOL^{™}), 2,2,4-trimethyl-1,3-pentanediol monoisobutyrate, and combinations thereof.

Suitable amounts of the (iv) one or more coalescing solvents may range from 0.1 to 1 wt.%, or, preferably, from 0.5 to 1 wt.%, based on the total weight of the aqueous composition. In general, the softer the polymer or the lower the measured Tg , the less of coalescing solvent is used to insure effective film formation.

The aqueous compositions in accordance with the present invention may further comprise any of one or more pigment dispersants, a defoamer, a wetting agent, an anti-settling agent, an antifoaming agent, a thickener or rheology modifier, an ultraviolet absorber, a light stabilizer, a surface control agent, or a combination thereof. The total amount of additive can be present in an amount of 10 wt.% or less or 5% wt.% or less, based on the total weight of the aqueous composition. The wetting agent may be a VOC and should therefore be used at 1 wt.% or less, based on the total weight of the aqueous composition.

### Aqueous Coating Composition

The aqueous coating composition of the present invention comprises the aqueous composition comprising the (i) aqueous acrylic or vinyl polymer dispersion, (ii) one or more pigments, extenders or colorants or their combination, and the (iii) one or more glycol ether amines combined with a water dispersible polyisocyanate curing agent. The aqueous coating composition of the present invention comprise a stable pigment dispersion that upon curing forms a layer of a polyurethane, in coating operative contact to at least a portion of a substrate capable of being coated. The curing agent initiates cure upon mixing; and so the method of using the aqueous coating compositions of the present invention comprises keeping the curing agent separate until the time of use and combining it with the aqueous composition just before applying it to a substrate or making a film from it.

Suitable polyisocyanates for use as a curing agent in accordance with the present invention may include any molecule having 2 or more isocyanate groups and that can be dispersed in or dissolved in water at room or ambient temperature, and mixtures and combinations thereof. Such polyisocyanates can be aliphatic, aromatic or mixture of both. Although polyisocyanates have an average functionality of >2, preferably they have a higher average functionality of from 2.5 to 10. Examples of water dispersible polyisocyanates include aliphatic diisocyanates, as well as dimers and trimers thereof, such as, for example, C₂ to C₈ alkylene diisocyanates, such as tetramethylene diisocyanate and hexamethylene diisocyanate (HDI); alicyclic diisocyanates, as well as dimers and trimers thereof, such as, for example, isophorone diisocyanate (IPDI) and dicyclohexyl methane diisocyanate (HMDI); aromatic diisocyanates, as well as dimers and trimers thereof, such as, for example, toluene diisocyanate (TDI), and diphenyl methane diisocyanate (MDI). Examples of dimers and trimers of polyisocyanates include biuret adducts, allophanates, uretdiones, urethoimines, isocyanurates, oxadiazinetriones, and polymethylene polyphenyl polyisocyanates. Such polyisocyanates, dimers and trimers may be used singly, or in a combination of two or more. Among these polyisocyanates, aliphatic diisocyanates, alicyclic diisocyanates, and dimers or trimers of these diisocyanates may improve the flexibility of the resulting coating film.

Polyisocyanate compositions of isocyanurates or trimers may be prepared by methods known in the art, for example, as disclosed in U.S. patent publication no. 2006/0155095A1, to Daussin et al., by trimerizing an alicyclic diisocyanate (e.g. isophorone diisocyanate) in the presence of one or more trimerization catalyst, such as, for example, a tertiary amine or phosphine, or a heterogeneous catalyst, and, if desired, in the presence of solvents and/or assistants, such as cocatalysts, expediently at elevated temperature, until the desired NCO content has been reached, and then deactivating the catalyst using inorganic or organic acids, the corresponding acid-halides and alkylating agents and, preferably, heating. Isocyanurate compositions containing isocyanurates from aliphatic diisocyanates may likewise be formed by cyclizing aliphatic diisocyanates in the presence of one or more trimerization catalyst and then deactivating the catalyst. Any of the isocyanurates can be further modified by conventional methods to contain urethane, urea, imino-s-triazine, uretonimine or carbodiimide moieties.

Other suitable water dispersible polyisocyanates may include, for example, polyether modified polyisocyanates, such as, for example, a polyalkoxylated isocyanurate having two isocyanate groups or isocyanate prepolymers, such as those obtained from polyethers. One suitable polyisocyanate prepolymer composition may be formed by reaction of bis(isocyanotomethyl) cyclohexane and/or another aliphatic diisocyanate with a monol, diol, diamine, or monoamine, which is then modified by the reaction of additional isocyanate to form allophanate or biuret modified prepolymers. Such prepolymers may further comprise a polyalkoxy or polyether chain. Alternatively, such prepolymers can then be mixed with a trimerization catalyst giving an allophanate or biuret modified polyisocyanate isocyanurate compositions. Preparation of such allophanate or biuret prepolymers, followed by trimerization, is known in the art, see for example, U.S. Pat. Nos. 5,663,272 and 6,028,158. Still further, suitable polyisocyanates may be modified by an aminosulfonic acid the render them water dispersible. It is also possible to use, as a polyisocyanate, a prepolymer formed by reacting the polyisocyanate or a trimer, dimer, or adduct thereof with a compound reactive to the polyisocyanate under conditions such that the isocyanate groups are present in excess. Examples of the compound reactive to the polyisocyanate includes compounds that have active hydrogen groups such as hydroxy or amino, and specific examples thereof include polyhydric alcohols, low-molecular-weight polyester resins, and amines.

Still other examples of a water dispersible polyisocyanate include, for example, a homopolymer of an isocyanate-containing polymerizable unsaturated monomer, such as isocyanatoethyl (meth)acrylate, or a copolymer of the isocyanate-containing polymerizable unsaturated monomer and a polymerizable unsaturated monomer other than the isocyanate-containing polymerizable unsaturated monomer, such as any vinyl or acrylic or styrene monomer.

In general, water dispersible polyisocyanate compositions suitable as a curing agent will have solids contents of from 20 to 70 wt.%, preferably, from 25 to 65 wt%, or, more preferably, from 30 to 60 wt.%.

The aqueous coating compositions of the present invention may comprise equivalent ratios of the total number of isocyanate group equivalents to hydroxyl group equivalents ranging from 0.7:1.0 to 2.0:1.0. For example, the ratio of isocyanate equivalents in the polyisocyanate composition component, which may contain several different polyisocyanates, to the total number of hydroxyl group equivalents in the aqueous coating compositions may range 0.8:1.0 or higher, or 1.8:1.0 or lower, or, preferably, from 0.9:1 to 1.5:1

The total solids content of the aqueous coating compositions of the present invention may range from 20 to 70 wt.%, preferably, from 25 to 65 wt.%, or, more preferably, from 30 to 60 wt.%.

The aqueous coating compositions of the present invention can be applied to the surface of a substrate(s) or carrier, such as a film, by any suitable method such as, for example, brushing, calendaring, rolling, spraying, mopping, troweling, or dipping. In one example, in a method of coating a surface of a substrate, the method comprises applying the curable aqueous coating composition to at least a portion of the surface of the substrate or a carrier and curing the curable aqueous coating composition at a curing temperature of 15° C. to 80 °C, including room or ambient temperature, so as to prepare a coated substrate or carrier comprising a polyurethane coating or film thereon.

Substrates suitable for being coated, or sealed independently can comprise any material to which a polyurethane would stick. Examples of suitable material are wood, metal, ceramic, plastic, and glass. The surface of the substrate being coated, adhered to, or sealed can be irregular or regular, continuous or discontinuous, porous or non-porous, jointed or not jointed. The substrate being coated, or sealed can be of any shape including, for example, a flat or rolled sheet (e.g., cylinder) sphere, beads, or finely divided particles.

### EXAMPLES

The following examples illustrate the present invention. Unless otherwise indicated, all parts and percentages are by weight and all temperatures are in °C and all preparations and test procedures are carried out at ambient conditions of room temperature (23 °C) and pressure (1 atm). In the Examples and Tables 1, 2, and 3 that follow, the following abbreviations not otherwise defined were used:
CE: Comparative Example; rpm: revolutions per minute; KU: Krebs Units; 3M: Minnesota Mining and Manufacturing Co.; 2-HEMA: 2-hydroxyethyl methacrylate; BA: butyl acrylate; Sty:
Styrene; MMA: methyl methacrylate; IBOMA: isobornyl methacrylate; MAA: methacrylic acid.
Materials: All the materials used to make the aqueous coating composition formulation are listed in Table 1, below. Examples comprised aqueous coating compositions having four separate pH neutralizers: Two comparative examples, CE1 and CE2, respectively, comprised an aminomethyl propanol and a trialkanolamine; and two inventive Examples 1 and 2 comprised glycol ether amines.

**Table 1: Materials**

| **Ingredient** | **Chemical or Product (if sold)** | **Chemical Description, Formula, or Structure** |
|---|---|---|
| **CE1:** pH neutralizer 1 | AMP-95^{™} liquid (Angus Chem, Niagara, NY) | 2-amino-2-methyl-1-propanol with 5 |
| | | wt% water 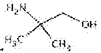 |
| **CE2:** pH neutralizer 2 | DMEA (Shanghai Chemical Reagent Company, Shanghai, PRC or SCRC) | Dimethylethanolamine |
| | | CH₃ |
| **CE3:** pH neutralizer 3 | PM-amine (Dow) | 1-methoxy-2-propanamine |
| | | 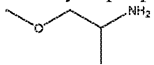 |
| **Example 1:** pH neutralizer 4 | DPM-amine (Dow, Midland, MI or Dow) | 1-(2-methoxy-1-methylethoxy)-2-aminopropane |
| | | 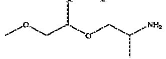 |
| **Example 2:** pH neutralizer 5 | DPnB--amine (Dow) | 1-(2-butoxy-1-methylethoxy)-2-aminopropane |
| | | 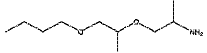 |
| Dispersing agent | DISPERBYK^{™} 190 (BYK Chemie USA, Wallingford, CT) | Solution in water of a high molecular weight block copolymer with pigment affinic groups (40 wt.% solids) |
| Wetting Agent | TEGO^{™} Twin 4100 surfactant Evonik | siloxane-containing gemini surfactant |
| Antifoam agent | TEGO^{™} AIREX^{™} 902W additive (Evonik, DE) | Compatible deaerator emulsion containing polyether siloxane |
| Pigment | TI-PURE^{™} R-706 titania (Dupont, Wilmington, DE) | Rutile titanium dioxide (TiO₂ ) pigment |
| Rheology Modifier | ACRYSOL^{™} RM-8W rheology modifier (Dow) | Nonionic urethane rheology modifier (21.5 wt.% solids) |
| Binder | BAYHYDROL^{™} A 2470 binder (Covestro, Pittsburgh, PA) | Aqueous hydroxyl functional acrylic (30 2-HEMA/25 BA/20 Sty/15 MMA/5 IBOMA/5 MAA w/w) polymer dispersion; |
| | | 45 wt.% polymer solids; hydroxyl content (on solid resin, calculated) is 3.9% |
| Coalescing Agent 1 | DOWANOl^{™} DPnB coalescent (Dow) | C₄H₉O[CH₂CH(CH₃)O]₂H |
| Coalescing Agent 2 | DOWANOL^{™} PM coalescent (Dow) | CH₃OCH₂CHOHCH₃ |
| Anti-flash rust Agent | NaNO₂ (15 wt.% in water) (SCRC) | |
| Isocyanate curing agent | AQUOUN^{™} 268 isocyanate (Wanhua, Shanghai, PRC) | Water dispersible of a polyisocyanate made from hexamethylene diisocyanate (HMDI) |

The aqueous coating formulations tested in the Examples are listed in Table 2, below. The following formulation methods were employed:
Pigment Grind: In the grinding process, water, dispersing agent, wetting agent, antifoam agent and pH neutralizer were added into a 1L plastic cylinder in the sequence shown in Table 2, below. Then, the mixture was mixed by dispersing machine equipped with a tooth shaped dispersing plate (DISPERSER^{™}, type SFJ-400, Shanghai XianDai Environment Engineering Technique Co., Ltd. , Shanghai, PRC), aka a dissolver, at 400 rpm for 10 minutes. After that, the pigment was added into the cylinder step by step, gradually over a 30-minute period, and the dispersing speed was gradually increased to 2000 rpm. The dissolver was kept at 2000 rpm for 30 more minutes, followed by the addition of the rheology modifier and water to obtain a pigment dispersion.
Letdown and Coating Composition Formation: In the letdown process and in the Part A/ Part B mixing process, A triple agitator blade was used instead of a dissolver element in the dispersing machine. The materials in the letdown process, listed in Table 2, below, were added into the pigment dispersion in the same container used for making the pigment dispersion, and the mixing speed was decreased to 1000 rpm gradually and was kept at 1000 rpm, mixing for 15 minutes to obtain an aqueous acrylic or vinyl polymer dispersion. The resulting aqueous dispersion, as Part A, was allowed to stand for 1 day (24 hours) for deaerating. Then, Part B was added into Part A, and mixed using the dispersing machine at 600 rpm for 10 minutes.

**Table 2: Coating Composition Formulation**

| **Ingredient** | **CE1** | **CE2** | **CE3** | **Example 1** | **Example 2** |
|---|---|---|---|---|---|
| | | (amounts in grams) | | | |
| **Part A** | | | | | |
| **Grinding process** | | | | | |
| Water | 4.81 | 4.81 | 4.81 | 4.81 | 4.81 |
| Dispersing Agent | 1.28 | 1.28 | 1.28 | 1.28 | 1.28 |
| Wetting Agent | 0.18 | 0.18 | 0.18 | 0.18 | 0.18 |
| Antifoam Agent | 0.05 | 0.05 | 0.05 | 0.05 | 0.05 |
| pH neutralizer 1 | 0.2 | | | | |
| pH neutralizer 2 | | 0.2 | | | |
| pH neutralizer 3 | | | 0.2 | | |
| pH neutralizer 4 | | | | 0.2 | |
| pH neutralizer 5 | | | | | 0.2 |
| Pigment | 20.5 | 20.5 | 20.5 | 20.5 | 20.5 |
| Rheology Modifier | 0.46 | 0.46 | 0.46 | 0.46 | 0.46 |
| Water | 5.31 | 5.31 | 5.31 | 5.31 | 5.31 |

| **Letdown Process** | | | | | |
|---|---|---|---|---|---|
| Binder | 35.35 | 35.35 | 35.35 | 35.35 | 35.35 |
| DI Water | 20.39 | 20.39 | 20.39 | 20.39 | 20.39 |
| Coalescing agent 1 | 0.48 | 0.48 | 0.48 | 0.48 | 0.48 |
| Coalescing agent 2 | 0.32 | 0.32 | 0.32 | 0.32 | 0.32 |
| Anti-flash rust Agent | 0.9 | 0.9 | 0.9 | 0.9 | 0.9 |
| Rheology Modifier | 0.66 | 0.66 | 0.66 | 0.66 | 0.66 |
| | | | | | |

| **Part B** | | | | | |
|---|---|---|---|---|---|
| Isocyanate Curing Agent | 9.12 | 9.12 | 9.12 | 9.12 | 9.12 |

Test Methods: The following test methods were used in the examples that follow: Dispersing Efficiency: In the pigment grind process, after adding pigment and before adding rheology modifier and water, the KU viscosity (in Krebs units) of each paste was measured after dispersing for 30 minutes with a viscometer (BROOKFIELD^{™} KU-2 Viscometer, AMETEK Brookfield, Middleboro, MA). A viscosity of less than 120 KU is acceptable. Lower viscosity means higher dispersing efficiency and better pigment dispersing performance.

Viscosity of aqueous dispersion composition of part A: After making the aqueous acrylic polymer dispersion of Part A, the KU viscosity of a part A sample was measured immediately (recorded as "initial"), and then again after 24 hours (recorded as "overnight") with a viscosity meter (BROOKFIELD^{™} KU-2 Viscometer). A viscosity of less than 70 KU is acceptable. pH Stability: After making the aqueous acrylic or vinyl polymer dispersion of Part A and letting it stand for 24 hours, pH was measured with a pH meter (METTLER TOLEDO^{™}, type S-470 scale Mettler Toledo, Columbus, OH), and the result was recorded as pH₀. Then, Part A was sealed in a 250-mL plastic cylinder and put in an oven (Model: UF110, MEMMERT GmbH, Schwabach, DE) at 50 ± 2°C. After 75 days, each sample was taken out of the oven and was cooled to room temperature, the pH was measured with the same pH meter, and the result was recorded as pH₁. The pH decrease after 75 days at 50 °C was calculated by below formula: $\frac{pH 0 - pH 1}{pH 0} \times 100 %$

Less change in pH means better pH stability. An acceptable limit to change in Ph is 5% or less. Gloss (60°): Gloss was tested according to GB/T 9754-2007 (Standardization Administration of China, Beijing, PRC). After mixing Part A and Part B to form an aqueous coating composition, coating films were drawn down on a glass panel with a bar applicator (150µm thickness). After curing at 60 °C for 45 minutes, the coating films were removed from the oven and tested using a BYK^{™} Micro-Tri-Gloss gloss tester (Byk Chemie, Wallingford, CT).

Early water resistance: After mixing Part A and Part B to form an aqueous coating composition, coating films were drawn down on a tin panel by a bar applicator (150µm thickness). The coating films were cured at room temperature for 15 minutes, followed by curing at 60 °C for 45 minutes, then put at room temperature for 1 hour. Next, the sides of the tin panel were sealed with 3M adhesive tape. The sealed panels were then immersed into a deionized water bath. After 48 hours, the appearance of the coating films were observed visually and were rated in accordance with ASTM D714 (2017). The appearance rating in ASTM D714 is shown in Table 3, below. The number represents the size of the blisters, and the letter represents the density of the blisters. The performance test results were summarized in Table 4, below.

**Table 3: Appearance Rating In ASTM D714**

| **Rating Defined** | **Abbreviation** |
|---|---|
| Few | F |
| Middle | M |
| Middle density | MD |
| Density | D |
| Best, no rust, no blister | 10 |
| The bigger the number, the smaller the blister | 9 ~ 1 |
| Rust all | 0 |

**Table 4: Performance Of Aqueous Coatings Having Various pH Neuotralizers**

| **Tested Property** | | **Performance Criteria** | **CE1** | **CE2** | **CE3** | **1** | **2** |
|---|---|---|---|---|---|---|---|
| Viscosity of grinding paste (Dispersing efficiency) (KU) | | - | 110.5 | 109.6 | 110.8 | 112.8 | 79.0 |
| Viscosity of Part A (KU) | Initial | | 52.7 | 52.7 | 52.5 | 52.7 | 53.3 |
| | Overnight | | 51.8 | 51.8 | 51.6 | 51.5 | 52.4 |
| pH stability, % | | - | 5.4 | 5.4 | 5.5 | 4.6 | 3.8 |
| Gloss | | ≥ 90 | 91.0 | 90.5 | 90.4 | 90.9 | 90.8 |
| Early water resistance | | ≥ 6M | 10 | 10 | 10 | 10 | 10 |

As shown in Table 4, above, the results were excellent across Inventive Examples 1 and 2 containing glycol ether amines corresponding to formula (I). In particular, Inventive Examples 1 and 2 exhibited a dramatic improvement in pH stability. And the aqueous coating composition of Inventive Example 2 containing a glycol ether amine having a larger R¹ group, also exhibited superior dispersing efficiency as compared to CE1, CE2, and CE3. The coatings made from the aqueous coating compositions of inventive Examples 1 and 2 both exhibited very good dry film properties of coating film gloss and early water resistance.

## Claims

1. An aqueous composition comprising:
(i) an aqueous acrylic or vinyl polymer dispersion wherein the polymer comprises an average of two or more hydroxyl groups or contains a polyol,
(ii) one or more pigments, extenders or colorants, or their combination, and,
(iii) one or more glycol ether amines having the following formula I: 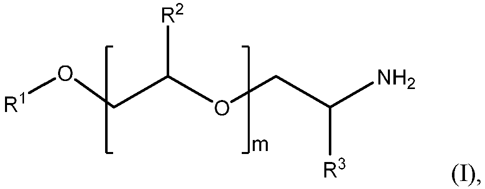 wherein R¹ is a C₁ to C₆ alkyl group, R² and R³ are, independently, CH₃ or CH₂-CH₃; and, m is 1 to 6.

2. The aqueous composition as claimed in claim 1 comprising from 15 to 50 wt.% as solids of the (i) acrylic or vinyl polymer that contains an average of two or more hydroxyl groups, based on the total weight of the aqueous composition.

3. The aqueous composition as claimed in claim 1, wherein, in formula I, R¹ is a C₃ to C₄ alkyl group and, m is from 1 to 2.

4. The aqueous composition as claimed in claim 1, wherein the amount of the (iii) one or more glycol ether amines ranges from 0.1 to 2 wt.%, based on the total weight of the aqueous composition.

5. The aqueous composition as claimed in claim 4, wherein the amount of the (iii) one or more glycol ether amines ranges from 0.1 to 1.5 wt.%, based on the total weight of the aqueous composition.

6. The aqueous composition as claimed in claim 1, further comprising (iv) one or more coalescing solvents.

7. The aqueous composition as claimed in claim 1 that is substantially free of volatile organic compounds and has a total of 50g/l or less of such compounds.

8. The aqueous composition as claimed in claim 1, further comprising a water dispersible polyisocyanate curing agent comprising one or more polyisocyanates in an aqueous coating composition.

9. The aqueous composition as claimed in claim 8, wherein the ratio of isocyanate equivalents in the water dispersible polyisocyanate curing agent to the total number of hydroxyl group equivalents in the aqueous acrylic or vinyl polymer dispersion ranges from 0.7: 1.0 to 2.0:1.0.

10. A method of forming a coating comprising:
applying the aqueous coating composition as claimed in claim 8 to a substrate or a carrier; and,
curing it to form a coating or film on the substrate or carrier.

## Patentansprüche

1. Wässrige Zusammensetzung, umfassend:
(i) eine wässrige Acryl- oder Vinylpolymerdispersion, wobei das Polymer durchschnittlich zwei oder mehr Hydroxylgruppen umfasst oder ein Polyol enthält,
(ii) ein oder mehrere Pigmente, Füllstoffe oder Farbmittel oder deren Kombination, und
(iii) ein oder mehrere Glykoletheramine mit der folgenden Formel I: 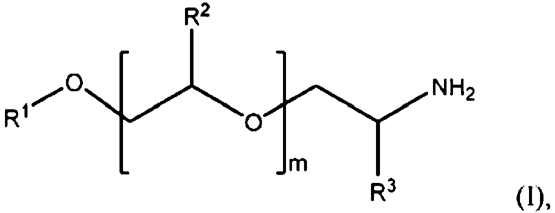 wobei R¹ eine C₁- bis C₆-Alkylgruppe ist, R² und R³ unabhängig voneinander CH₃ oder CH₂-CH₃ sind; und m 1 bis 6 ist.

2. Wässrige Zusammensetzung nach Anspruch 1, umfassend von 15 bis 50 Gew.-% als Feststoffe des (i) Acryl- oder Vinylpolymers, das durchschnittlich zwei oder mehr Hydroxylgruppen enthält, bezogen auf das Gesamtgewicht der wässrigen Zusammensetzung.

3. Wässrige Zusammensetzung nach Anspruch 1, wobei in Formel I R¹ eine C₃- bis C₄-Alkylgruppe ist und m von 1 bis 2 ist.

4. Wässrige Zusammensetzung nach Anspruch 1, wobei die Menge der (iii) einen oder mehreren Glykoletheramine im Bereich von 0,1 bis 2 Gew.-% liegt, bezogen auf das Gesamtgewicht der wässrigen Zusammensetzung.

5. Wässrige Zusammensetzung nach Anspruch 4, wobei die Menge der (iii) einen oder mehreren Glykoletheramine im Bereich von 0,1 bis 1,5 Gew.-% liegt, bezogen auf das Gesamtgewicht der wässrigen Zusammensetzung.

6. Wässrige Zusammensetzung nach Anspruch 1, ferner umfassend (iv) ein oder mehrere koaleszierende Lösungsmittel.

7. Wässrige Zusammensetzung nach Anspruch 1, die im Wesentlichen frei von flüchtigen organischen Verbindungen ist und insgesamt 50 g/l oder weniger solcher Verbindungen aufweist.

8. Wässrige Zusammensetzung nach Anspruch 1, ferner umfassend einen wasserdispergierbaren Polyisocyanathärter, umfassend ein oder mehrere Polyisocyanate in einer wässrigen Beschichtungszusammensetzung.

9. Wässrige Zusammensetzung nach Anspruch 8, wobei das Verhältnis von Isocyanat-Äquivalenten in dem wasserdispergierbaren Polyisocyanathärter zu der Gesamtzahl von Hydroxylgruppen-Äquivalenten in der wässrigen Acryl- oder Vinylpolymerdispersion im Bereich von 0,7:1,0 bis 2,0:1,0 liegt.

10. Verfahren zum Bilden einer Beschichtung, umfassend:
Aufbringen der wässrigen Beschichtungszusammensetzung nach Anspruch 8 auf ein Substrat oder einen Träger; und
Aushärten derselben, um eine Beschichtung oder einen Film auf dem Substrat oder Träger zu bilden.

## Revendications

1. Composition aqueuse comprenant :
(i) une dispersion aqueuse de polymère acrylique ou vinylique, dans laquelle le polymère comprend une moyenne de deux groupes hydroxyle ou plus ou contient un polyol,
(ii) un ou plusieurs pigments, charges ou colorants, ou leur combinaison, et,
(iii) une ou plusieurs amines d'éther de glycol ayant la formule I suivante : 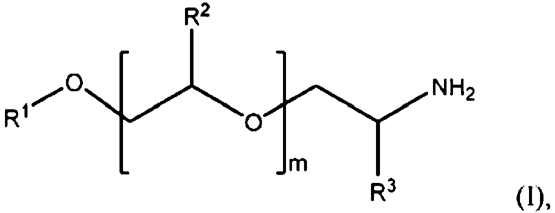 dans laquelle R¹ représente un groupe alkyle en C₁ à C₆, R² et R³ représentent, indépendamment, CH₃ ou CH₂-CH₃ ; et m va de 1 à 6.

2. Composition aqueuse selon la revendication 1 comprenant 15 à 50 % en poids, sous forme de matières solides, du (i) polymère acrylique ou vinylique qui contient une moyenne de deux groupes hydroxyle ou plus, par rapport au poids total de la composition aqueuse.

3. Composition aqueuse selon la revendication 1, dans laquelle, dans la formule I, R¹ représente un groupe alkyle en C₃ à C₄ et m va de 1 à 2.

4. Composition aqueuse selon la revendication 1, dans laquelle la quantité de (iii) la ou les amines d'éther de glycol va de 0,1 à 2 % en poids, par rapport au poids total de la composition aqueuse.

5. Composition aqueuse selon la revendication 4, dans laquelle la quantité de (iii) la ou les amines d'éther de glycol va de 0,1 à 1,5 % en poids, par rapport au poids total de la composition aqueuse.

6. Composition aqueuse selon la revendication 1, comprenant en outre (iv) un ou plusieurs solvants de coalescence.

7. Composition aqueuse selon la revendication 1 qui est sensiblement exempte de composés organiques volatils et qui a un total de 50 g/l ou moins de ces composés.

8. Composition aqueuse selon la revendication 1, comprenant en outre un agent de durcissement polyisocyanate dispersible dans l'eau comprenant un ou plusieurs polyisocyanates dans une composition de revêtement aqueuse.

9. Composition aqueuse selon la revendication 8, dans laquelle le rapport des équivalents isocyanate dans l'agent de durcissement polyisocyanate dispersible dans l'eau au nombre total d'équivalents groupe hydroxyle dans la dispersion aqueuse de polymère acrylique ou vinylique va de 0,7:1,0 à 2,0:1,0.

10. Procédé pour la formation d'un revêtement comprenant :
l'application de la composition de revêtement aqueuse selon la revendication 8 sur un substrat ou un support ; et,
le durcissement de celle-ci pour former un revêtement ou un film sur le substrat ou le support.
